Europäisches Patentamt

**European Patent Office**

Office européen des brevets

(11) Numéro de publication : **0 001 522**
**B1**

# FASCICULE DE BREVET EUROPÉEN

(45) Date de publication du fascicule du brevet :
07.04.82

(21) Numéro de dépôt : **78400104.2**

(22) Date de dépôt : **19.09.78**

(51) Int. Cl.³ : **H 04 Q   3/00**, H 04 B   1/58,
**H 04 Q   1/18**, H 04 M 19/00,
**H 04 Q 11/04**, H 01 P   5/16

(54) **Equipement électronique d'abonné, à circuit de conversion deux fils-quatre fils, pour central téléphonique.**

(30) Priorité : 27.09.77 FR 7729048

(43) Date de publication de la demande :
18.04.79 (Bulletin 79/08)

(45) Mention de la délivrance du brevet :
07.04.82 Bulletin 82/14

(84) Etats contractants désignés :
BE DE GB NL

(56) Documents cités :
DE - A - 2 556 157
US - A - 3 970 805
US - A - 4 041 252

(73) Titulaire : **JEUMONT-SCHNEIDER Société anonyme
dite:**
**31-32, Quai de Dion Bouton**
**F-92811 Puteaux Cedex (FR)**

(72) Inventeur : **Dumont, Alain**
**rue Henri Barbusse**
**71230 Saint-Vallier (FR)**
Inventeur : **Piolat, Christian**
**5, Place Wilson**
**F-69100 Villeurbanne (FR)**
Inventeur : **Oeillet, Guy**
**P8, rue de Paray Le Vernois**
**F-71300 Montceau-Les-Mines (FR)**

(74) Mandataire : **Paume, André et al**
**31-32, Quai de Dion Bouton**
**F-92811 Puteaux Cedex (FR)**

Imprimerie Jouve, 18, rue St-Denis, 75001 Paris, France

Equipement électronique d'abonné, à circuit de conversion deux fils-quatre fils, pour central téléphonique

L'invention concerne un équipement électronique d'abonné, à circuit de conversion deux fils-quatre fils, pour central téléphonique.

Il existe une multitude de façons de réaliser un équipement de ce genre.

Généralement, les équipements électroniques connus assurent au moins les fonctions suivantes : transmission des signaux vocaux dans les deux sens à l'aide d'un circuit de conversion deux fils-quatre fils, alimentation en courant continu de la ligne d'abonné, élimination de l'effet local, et quelquefois les fonctions supplémentaires : détection d'une fermeture de boucle, appel de l'abonné. Mais ils n'assurent pas la fonction de stabilisation du courant continu à par exemple 30 mA dans la ligne de l'abonné, car jusqu'à présent cette stabilisation est obtenue par des moyens situés non pas dans le central mais chez l'abonné.

Dans la plupart des équipements connus, les deux fonctions « transmission des signaux vocaux » et « alimentation de la ligne d'abonné » sont remplies indépendamment et isolément, et l'élimination de l'effet local est obtenue à l'aide d'un translateur ou à l'aide d'un circuit électronique comportant des amplificateurs différentiels.

Le document DE-A. 2 556 157 décrit un équipement électronique d'abonné à circuit de conversion deux fils-quatre fils comportant :

— une source de tension continue dont le pôle positif est relié à la masse,

— un premier transistor dont la base est reliée à la sortie d'émission du central téléphonique dont l'émetteur est relié au pôle négatif et le collecteur à la masse par des réseaux respectifs de résistances,

— un premier montage Darlington dont l'émetteur et le collecteur du transistor de sortie sont reliés respectivement à la masse et à un premier fil de la ligne d'abonné, la base du transistor d'entrée étant reliée au collecteur du premier transistor.

— un second montage Darlington dont l'émetteur et le collecteur du transistor de sortie sont reliés respectivement à la masse et au second fil de la ligne d'abonné, la base du transistor d'entrée étant reliée à l'émetteur du premier transistor.

Ces montages Darlington, réalisés au moyen de transistors pnp, ayant leur charge répartie entre l'émetteur et le collecteur des transistors de sortie, sont utilisés pour assurer l'alimentation de la ligne d'abonné qui est isolée pour le courant continu par rapport au central, ainsi que l'élimination de l'effet local. Cette dernière est obtenue, pour le signal alternatif entrant, du fait que la différence de tension entre l'émetteur et le collecteur des transistors de sortie est nulle, un jeu de résistances interdisant alors à ce signal entrant d'atteindre les bornes de sortie de l'équipement, et, pour le signal alternatif sortant, du fait que la jonction collecteur-émetteur des transistors de sortie présente une impédance très élevée permettant de le dériver vers un pont de résistances connecté aux bornes de sortie de l'équipement.

Le montage à transistors utilisé dans la présente invention procure une très grande simplification de l'équipement d'abonné, un grain de place et de prix, la possibilité de réaliser la presque totalité du schéma en circuit intégré. De plus, on peut facilement lui adjoindre un stabilisateur du courant continu dans la ligne d'abonné et cela indépendamment de la longueur de cette ligne et automatiquement, sans aucun réglage préalable, alors que généralement cette stabilisation du courant continu s'effectue chez l'abonné par un réglage de résistances avant la mise en service de la ligne.

Dans le cas particulier où le central téléphonique travaille en multiplex par partage du temps, l'équipement selon l'invention est non seulement applicable sans modification, mais certains de ses composants participent à la réalisation du circuit de filtrage servant à la restitution du signal vocal à partir des échantillons reçus de ce signal, ce qui procure à nouveau un gain de composants, de place et de prix.

L'équipement selon l'invention est caractérisé en ce qu'il comporte :

— une source de tension continue dont le pôle positif est relié à la masse,

— un premier transistor dont la base est reliée à la sortie d'émission du central téléphonique, dont l'émetteur est relié à la masse par une première résistance et dont le collecteur est relié au pôle négatif de la source de tension continue par l'intermédiaire d'une deuxième résistance identique à la première,

— un deuxième transistor dont la base est reliée à l'émetteur du premier transistor, dont le collecteur est relié à la masse et dont l'émetteur est relié au premier fil de la ligne d'abonné par l'intermédiaire d'une troisième résistance,

— un troisième transistor dont la base est reliée au collecteur du premier transistor, dont le collecteur est relié au pôle négatif de la source et dont l'émetteur est relié au second fil de la ligne d'abonné par l'intermédiaire d'une quatrième résistance identique à la troisième et de valeur ohmique égale à la moitié de celle de l'impédance globale de la ligne et du poste d'abonné, les deuxième et troisième transistors étant de type inverse,

— un quatrième transistor dont la base est reliée au second fil de la ligne d'abonné, dont l'émetteur est relié à l'émetteur du troisième transistor par l'intermédiaire d'une cinquième résistance et dont le collecteur est relié d'une part au premier fil de la ligne d'abonné par l'intermédiaire d'une sixième résistance identique à la cinquième, d'autre part à l'entrée de réception du central téléphonique.

Les deuxième et troisième transistors de l'équipement, du type npn, sont montés en émetteur- suiveur et constituent des générateurs de tension.

L'effet anti-local est obtenu alors, pour le signal alternatif sortant, du fait que l'impédance de leur jonction émetteur-collecteur est nulle, et, pour le signal alternatif entrant, du fait que la tension alternative sur le quatrième transistor ayant un gain unitaire, la tension alternative aux bornes de la sixième résistance est égale à celle aux bornes de la quatrième, donc à celle existant aux bornes de la troisième résistance.

L'invention sera mieux comprise à l'aide d'exemples de réalisation et des dessins annexés où :

la figure 1 représente le schéma d'un équipement électronique d'abonné pour central téléphonique à commutation de type quelconque (spatiale ou temporelle) sans stabilisateur du courant continu de la ligne d'abonné,

la figure 2, le même schéma que celui de la figure 1 mais avec adjonction d'un tel stabilisateur,

la figure 3, le schéma d'un équipement semblable à celui de la figure 2 mais complété par un condensateur de mémorisation et par un circuit de filtrage, pour installation dans un central téléphonique travaillant en multiplex par partage du temps.

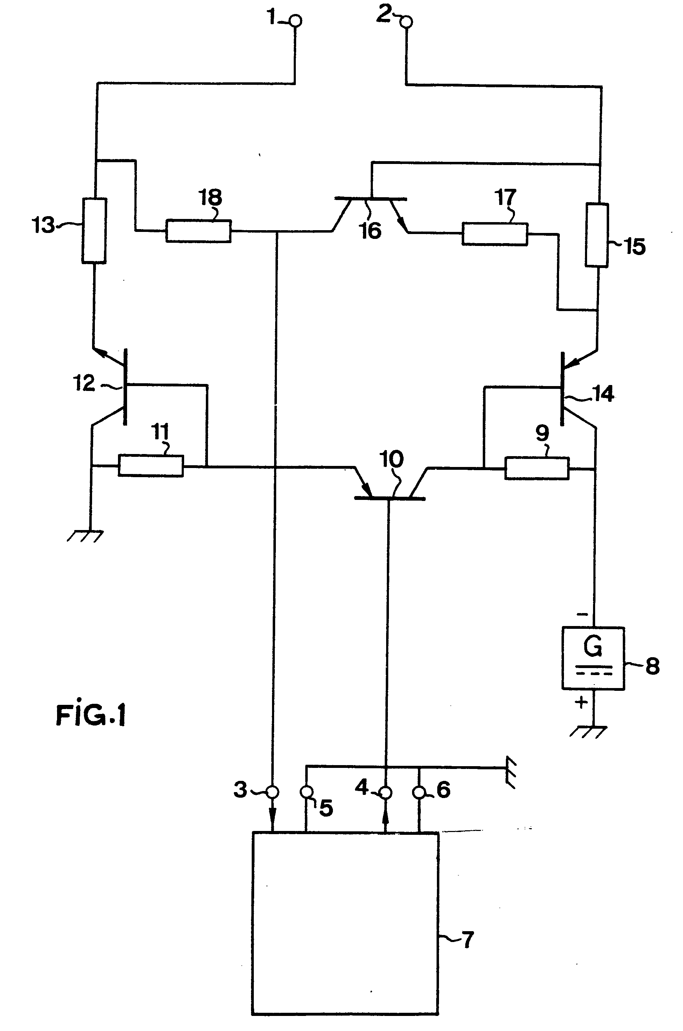

Sur la figure 1, l'équipement d'abonné est relié d'une part par les bornes 1 et 2 à la ligne de l'abonné correspondant, d'autre part par les bornes 3, 4 et les bornes 5, 6 au central téléphonique 7. La borne 3 est relative au signal vocal émis par l'abonné vers le central 7 et la borne 4 au signal vocal provenant du central 7.

Une source de tension continue 8 a son rôle positif relié à la masse et son pôle négatif relié par l'intermédiaire d'une résistance 9 au collecteur d'un transistor 10 de type PNP dont la base est reliée à la borne 4 et dont l'émetteur est relié à la masse par une résistance 11, de même valeur ohmique que la résistance 9.

Un second transistor 12, de type npn, a sa base reliée à l'émetteur du transistor 10, son collecteur relié à la masse et son émetteur relié à la borne 1 par l'intermédiaire d'une résistance 13.

Un troisième transistor 14, de type PNP, a sa base reliée au collecteur du transistor 10, son collecteur relié au pôle négatif de la source 8 et son émetteur relié à la borne 2 par l'intermédiaire d'une résistance 15 de même valeur ohmique que la résistance 13.

Un quatrième transistor 16, de type NPN, a sa base reliée à la borne 2, son émetteur relié à l'émetteur du transistor 14 par l'intermédiaire d'une résistance 17 et son collecteur relié d'une part à la borne 3, d'autre part à la borne 1 par l'intermédiaire d'une résistance 18. Les résistances 17 et 18 sont de même valeur ohmique.

Le transistor 10 est un transistor déphaseur dont les résistances d'émetteur et de collecteur sont égales.

Les transistors 12 et 14 sont des transistors d'adaptation.

Le circuit 16, 17, 18 est un circuit d'élimination de l'effet local où le transistor 16 a un gain égal à l'unité par suite de l'égalité des résistances 17 et 18.

Les résistances égales 13 et 15 doivent être choisies de manière que, lorsqu'on considère le circuit d'émission de signal vocal de l'abonné vers le central, où le poste téléphonique joue le rôle de générateur faisant apparaître une certaine tension entre les bornes 1 et 2, il apparaisse une tension moitié de cette dernière aux bornes de chacune des résistances 13 et 15 en considérant que l'équipement d'abonné est équivalent à un circuit comportant seulement entre les bornes 1 et 2 les deux résistances 13 et 15 en série.

Le fonctionnement du montage à transistors selon l'invention est le suivant :

Admettons que la ligne et le poste téléphonique d'abonné, branchés entre les bornes 1 et 2 et non représentés sur le schéma, aient ensemble une impédance de 600 ohms et que les deux résistances 13 et 15 aient une valeur moitié, soit 300 ohms chacune, ce qui correspond aux installations téléphoniques courantes.

La tension appliquée entre 4 et 6, due au signal vocal provenant du central 7, se trouve appliquée d'une part dans le même sens entre l'émetteur du transistor 10 et la masse, d'autre part en sens opposé entre le collecteur de ce transistor et la masse, ce qui fait qu'une tension double de celle appliquée entre 4 et 6 apparaît entre les bases des transistors 12 et 14. Il en résulte l'apparition d'une tension moitié aux bornes de chacune des résistances 13 et 15 et d'une tension égale à celle appliquée entre 4 et 6, entre les bornes 1 et 2, ce qui répond aux conditions désirées.

Lorsqu'une tension est appliquée entre les bornes 4 et 6, la moitié de celle-ci apparaît aux bornes de la résistance 15 et par conséquent aux bornes de la résistance 18. La tension de sortie entre les bornes 3 et 5 est alors nulle, ce qui correspond bien à l'élimination de l'effet local.

En ce qui concerne la tension appliquée entre 1 et 2, due au signal vocal émis par l'abonné, elle se répartit par moitié dans chacune des résistances 13 et 15, car tout se passe comme si les émetteurs des transistors 12 et 14 étaient reliés à la masse, étant donné la très basse impédance que ces émetteurs présentent par rapport à la masse.

Cette même tension se répartit également par moitié dans chacune des résistances 17 et 18.

Par rapport à la masse, il apparaît donc sur le collecteur du transistor 16 une tension égale à la somme des tensions aux bornes des résistances 18 et 13, c'est-à-dire la tension appliquée.

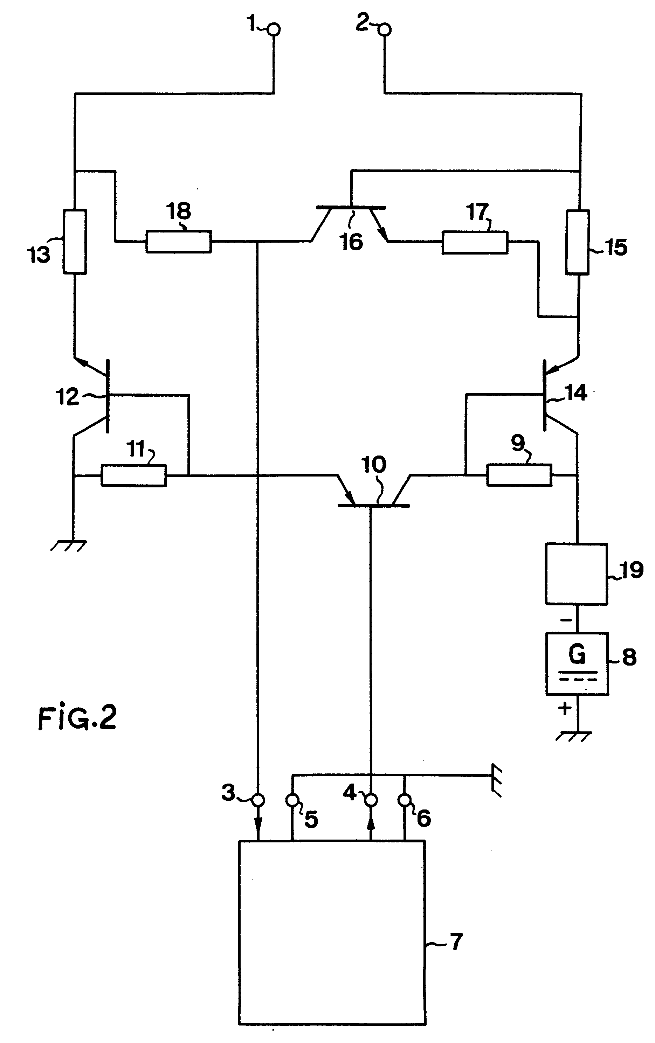

On reconnaît sur la figure 2 les mêmes composants que ceux de la figure 1, affectés des mêmes repères numériques ; la seule différence est que l'on a intercalé, entre le générateur 8 et l'ensemble 9, 14, un stabilisateur de courant 19 pour imposer dans la ligne d'abonné un courant de valeur prédéterminé, par exemple 30 mA.

Le courant limité par 19 à 30 mA ne peut emprunter que le circuit suivant : 8, 14, 15, la ligne et le poste d'abonné branchés entre 1 et 2, puis 13, 12 et la masse.

En variante, on peut remplacer le générateur 8 de la figure 1 par un générateur à courant constant de type connu.

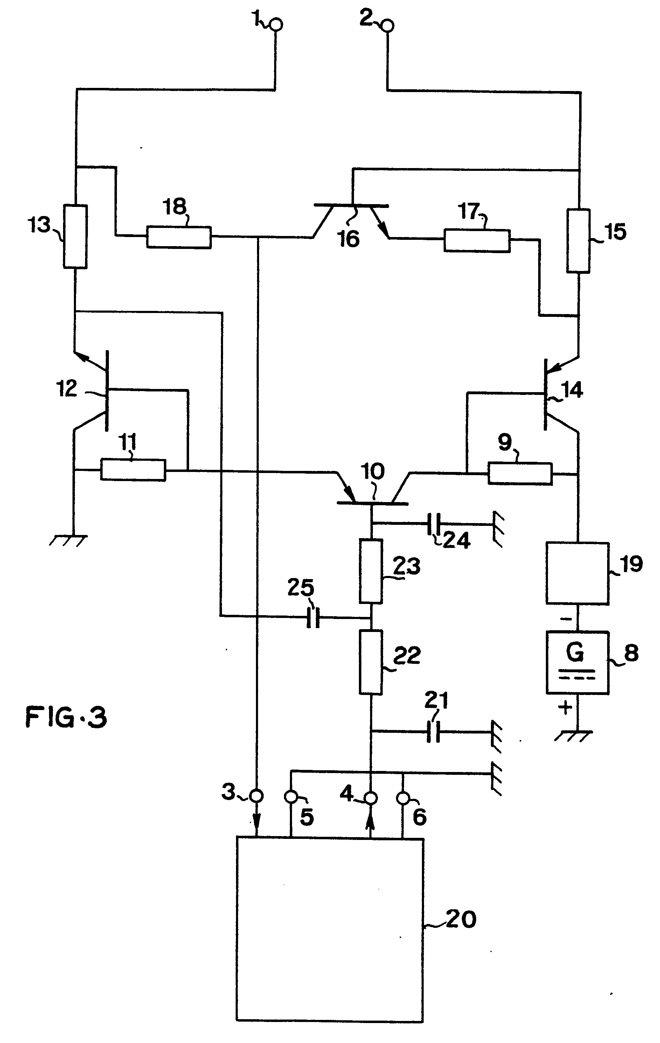

La figure 3 est relative à un équipement d'abonné spécialement conçu pour être installé dans un central électronique 20 travaillant en multiplex par partage du temps. L'équipement d'abonné diffère de celui de la figure 1 ou de la figure 2 par l'adjonction d'un condensateur de mémorisation 21 branché entre la borne 4 et la masse et par l'adjonction d'un circuit de filtrage comportant : deux résistances 22 et 23, branchées en séries entre la borne 4 et la base du transistor 10, cette dernière étant reliée à la masse par l'intermédiaire d'un condensateur 24, et enfin un condensateur 25 branché entre l'émetteur du transistor 12 et la connexion reliant 22 et 23. En fait, le circuit de filtrage réel est constitué non seulement par les composants précités mais également par les transistors 10 et 12 et la résistance 11 dont une extrémité est à la masse. Normalement un filtre passe-bas du deuxième ordre tel que celui de la figure 3, comprendrait des composants 22 à 25 branchés de la même manière plus un amplificateur dont l'entrée serait reliée au point commun de 23 et 24 et dont la sortie serait reliée d'une part à la base du transistor 10, d'autre part à l'électrode de gauche du condensateur 25, celle-ci n'étant plus reliée à l'émetteur du transistor 12. Il est clair que la branche 10, 11, 12 plus la masse jouent le rôle d'amplificateur pour le circuit de filtrage 22 à 25 adjoint à l'équipement d'abonné. Le montage de la figure 3 permet donc d'économiser un amplificateur.

L'équipement selon l'invention est particulièrement adapté à une réalisation sous forme de circuits intégrés.

### Revendications

1. Equipement électronique d'abonné, à circuit de conversion deux fils-quatre fils, pour central téléphonique, caractérisé en ce qu'il comporte :
— une source de tension continue (8) dont le pôle positif est relié à la masse,
— un premier transistor (10) dont la base est reliée à la sortie d'émission (4) du central téléphonique (7), dont l'émetteur est relié à la masse par une première résistance (11) et dont le collecteur est relié au pôle négatif de la source de tension continue (8) par l'intermédiaire d'une deuxième résistance (9) identique à la première (11),
— un deuxième transistor (12) dont la base est reliée à l'émetteur du premier transistor (10), dont le collecteur est relié à la masse et dont l'émetteur est relié au premier fil (1) de la ligne d'abonné par l'intermédiaire d'une troisième résistance (13),
— un troisième transistor (14) dont la base est reliée au collecteur du premier transistor (10), dont le collecteur est relié au pôle négatif de la source (8) et dont l'émetteur est relié au second fil (2) de la ligne d'abonné par l'intermédiaire d'une quatrième résistance (15) identique à la troisième (13) et de valeur ohmique égale à la moitié de celle de l'impédance globale de la ligne et du poste d'abonné, les deuxième (12) et troisième (14) transistors étant de type inverse,
— un quatrième transistor (16) dont la base st reliée au second fil (2) de la ligne d'abonné, dont l'émetteur est relié à l'émetteur du troisième transistor (14) par l'intermédiaire d'une cinquième résistance (17) et dont le collecteur est relié d'une part au premier fil (1) de la ligne d'abonné par l'intermédiaire d'une sixième résistance (18) identique à la cinquième (17) d'autre part à l'entrée de réception (3) du central téléphonique (7).

2. Equipement selon la revendication 1, caractérisé en ce qu'il comporte un stabilisateur (19) du courant de la source (8), inséré en série avec ladite source (8), pour donner à ce courant une valeur prédéterminée.

3. Equipement selon l'une des revendications précédentes, pour central téléphonique (20) travaillant en multiplex par partage du temps, caractérisé en ce qu'il comporte :
— un circuit de filtrage branché entre la sortie d'émission (4) du central téléphonique (20) et la base du premier transistor (10), et constitué d'une part par deux résistances (22, 23) en série dont la connexion de mise en série est reliée à l'émetteur du deuxième transistor (12) par l'intermédiaire d'un premier condensateur (25), d'autre part par un deuxième condensateur (24) branché entre la masse et la base du premier transistor (10),
— un troisième condensateur (21) branché entre la masse et la sortie d'émission (4) du central téléphonique.

### Claims

1. A subscriber's electronic line equipment comprising a two-wire-four-wire conversion circuit for a telephone exchange, characterised in that it comprises :
— a d.c. voltage source (8) having its positive terminal connected to frame,
— a first transistor (10) having its base connected to the transmission output (4) of the telephone exchange (7), its emitter connected to frame by a first resistor (11) and its collector connected to the negative terminal of the d.c. voltage source (8) by a second resistor (9) identical with the first (11),
— a second transistor (12) having its base connected to the emitter of the first transistor (10), its collector connected to frame and its emitter connected to the first wire (1) of the subscriber's line by a third resistor (13),
— a third transistor (14) having its base connected to the collector of the first transistor (10), its collector connected to the negative terminal of the source (8) and its emitter connected to the second wire (2) of the subscriber's line by a fourth resistor (15) identical with the third (13) and having a value equal to half the total impedance of the line and the subscriber's set, the second transistor (12) and the third transistor (14) being of the inverse kind, and

— a fourth transistor (16) having its base connected to the second wire (2) of the subscriber's set, its emitter connected to the emitter of the third transistor (14) by a fifth resistor (17) and its collector connected (a) to the first wire (1) of the subscriber's line by a sixth resistor (18) identical with the fifth (17), and (b) to the receiving input (3) of the telephone exchange (7).

2. Equipment according to claim 1, characterised in that it comprises a stabilizer (19) for the current from the source (8), the stabilizer being inserted in series with the source (8) in order to give a predetermined value to the current.

3. Equipment according to either of the preceding claims for a time-division multiplex telephone exchange (20) characterised in that it comprises :

— a filter circuit connected between the transmission output (4) of the telephone exchange (20) and the base of the first transistor (10) and comprising (a) two resistors (22, 23) in series having their series connection connected to the emitter of the second transistor (12) by a first capacitor (25) and (b) a second capacitor (24) connected between frame and the base of the first transistor (10), and

— a third capacitor (21) connected between frame and the transmission output (4) of the telephone exchange.

**Ansprüche**

1. Elektronische Teilnehmerschaltung mit Zweidraht-Vierdraht-Gabelanordnung für Fernsprechvermittlung gekennzeichnet durch :

— eine Gleichspannungsquelle (8), deren positiver Pol mit Masse verbunden ist,

— einen ersten Transistor (10), dessen Basis mit dem Sendeausgang (4) der Fernsprechzentrale (7) verbunden ist, dessen Emitter über einen ersten Widerstand (11) mit Masse verbunden ist und dessen Kollektor über einen dem ersten Widerstand (11) gleichen zweiten Widerstand (9) mit dem negativen Pol der Gleichspannungsquelle (8) verbunden ist,

— einen zweiten Transistor (12), dessen Basis mit dem Emitter des ersten Transistors (10) verbunden ist, dessen Kollektor mit Masse verbunden ist und dessen Emitter über einen dritten Widerstand (13) mit dem ersten Draht (1) der Teilnehmerleitung verbunden ist,

— einen dritten Transistor (14), dessen Basis mit dem Kollektor der ersten Transistors (10) verbunden ist, dessen Kollektor mit dem negativen Pol der Gleichspannungsquelle (8) verbunden ist und dessen Emitter mit dem zweiten Draht (2) der Teilnehmerleitung über einen vierten Widerstand (15) verbunden ist, der gleich dem dritten Widerstand (13) ist und dessen ohmscher Widerstandswert gleich der Hälfte des ohmschen Widerstandswerts der Gesamtimpedanz der Teilnehmerleitung und der Teilnehmerstelle ist, wobei der zweite Transistor (12) und der dritte Transistor (14) zueinander komplementäre Typen sind,

— einen vierten Transistor (16), dessen Basis mit dem zweiten Draht (2) der Teilnehmerleitung verbunden ist, dessen Emitter über einen fünften Widerstand (17) mit dem Emitter des dritten Transistors (14) verbunden ist und dessen Kollektor einerseits über einen dem fünften Widerstand (17) gleichen sechsten Widerstand (18) mit dem ersten Draht (1) der Teilnehmerleitung und andrerseits mit dem Empfangseingang (3) der Fernsprechzentrale (7) verbunden ist.

2. Teilnehmerschaltung nach Anspruch 1, dadurch gekennzeichnet, daß ein Stabilisator (19) für den Strom der Gleichspannungsquelle (8) in Serie mit der Gleichspannungsquelle (8) geschaltet ist, um diesem Strom einen vorbestimmten Wert zu erteilen.

3. Teilnehmerschaltung nach einem der vorhergehenden Ansprüche, für eine im Zeitmultiplexbetrieb arbeitende Fernsprechzentrale (20), gekennzeichnet durch :

— eine zwischen den Sendeausgang (4) der Fernsprechzentrale (20) und die Basis des ersten Transistors (10) eingefügte Filterschaltung, die einerseits durch zwei in Serie geschaltete Widerstände (22, 23), deren Verbindungspunkt über einen ersten Kondensator (25) mit dem Emitter des zweiten Transistors (12) verbunden ist, und andrerseits durch einen zwischen Masse und der Basis des ersten Transistors (10) angeschlossenen zweiten Kondensator (24) gebildet ist,

— einen dritten Kondensator (21), der zwischen Masse und dem Sendeausgang (4) der Fernsprechzentrale angeschlossen ist.

FIG.1

FIG.2

FIG·3